# EUROPÄISCHE PATENTSCHRIFT

(11) **EP 2 229 582 B1**
(45) Veröffentlichungstag und Bekanntmachung des Hinweises auf die Patenterteilung: **03.04.2019**
(21) Anmeldenummer: 08801726.4
(22) Anmeldetag: 27.08.2008
(51) Int. Cl.: G01N 21/15, G01N 21/90

(54) **INSPEKTIONSVORRICHTUNG MIT ROTIERBARER BELEUCHTUNGSUMHAUSUNG**
INSPECTION DEVICE WITH ROTATABLE LIGHTING ELEMENT HOUSING
DISPOSITIF D'INSPECTION POURVU D'UN BOÎTIER D'ÉCLAIRAGE ROTATIF

(30) Priorität: 31.10.2007 DE 102007052302
(43) Veröffentlichungstag der Anmeldung: 22.09.2010
(73) Patentinhaber: KHS GmbH, 44143 Dortmund (DE)
(72) Erfinder: WIEMER, Heinrich, 21033 Hamburg (DE); BÖCKER, Horst, 58239 Schwerte (DE)
(86) Internationale Anmeldenummer: PCT/EP2008/006997
(87) Internationale Veröffentlichungsnummer: WO 2009/056188

(56) Entgegenhaltungen:
- EP-A- 1 600 762
- DE-A1- 3 839 682
- DE-A1- 10 147 617
- DE-A1- 19 605 133
- FR-A- 2 768 517

## Beschreibung

Die Erfindung betrifft eine Inspektionsvorrichtung zum Kontrollieren von Behältern, insbesondere Flaschen, mit den Merkmalen des Oberbegriffs des Patentanspruchs 1, d.h. eine Inspektionsvorrichtung, die mindestens eine Transportstrecke zum Zu- und Abfördern der Behälter, eine Beleuchtungseinheit, eine optische Messeinheit und eine Steuereinheit umfasst, wobei die Beleuchtungseinheit von einem um die Mittelachse rotierend gelagerten und transparenten Hohlkörper umschlossen wird und der Hohlkörper direkt oder über geeignete Wirkverbindungen motorisch antreibbar ist. Idealerweise ist der Hohlkörper ein Rohr, das aus einem Material oder einer Materialmischung hergestellt ist, welches für Strahlungen von Wellenlängen im optisch-sichtbaren Bereich, im Infrarotbereich und/oder im ultravioletten Bereich durchlässig ist, wobei das Material für diese Strahlungen mindestens teilweise durchlässig ist.

Aus dem Stand der Technik sind Vorrichtungen zur Beleuchtung und Inspektion von Behälterböden bekannt und hinreichend beschrieben. EP 0 894 544 A sowie die DE 196 05 133 A1 offenbaren eine Inspektionsmaschine, bei der die Behälter, hier Flaschen, über eine Beleuchtungseinheit hängend gefördert werden. Die Beleuchtungseinheit selbst ist ein quaderförmiger Block, der die Behälter von unten durchleuchtet. Im Prinzip sind diese Vorrichtungen bewährt und geeignet, müssen lediglich relativ häufig gereinigt werden um einen sicheren Betrieb und aussagekräftige Messwerte zu gewährleisten.

In der DE 10 2005 057 872 A1 wird vorgeschlagen, den von unten angestrahlten Transporteur, auf dem die zu inspizierenden Flaschen stehen, transparent und als Drehscheibe auszuformen. Hier wird die Verunreinigung auf der Beleuchtungseinheit selbst verringert, aber fest und flüssige Anhaftungen auf der transparenten Drehscheibe selbst, erfordern ebenfalls eine regelmäßige Reinigung.

Bekannt ist (DE 101 47 617 A1), bei einer Vorrichtung zum Aufschneiden von Lebensmittelprodukte, insbesondere zum Aufschneiden von Wurst oder Schinken unterhalb der Schneidkante eines Schneidwerkzeugs eine Beleuchtungseinrichtung anzuordnen, mit der ein Ausleuchten der Schnittseite des Lebensmittelproduktes durch Auflicht möglich Ist. Zur Vermeidung einer Verschmutzung der Beleuchtungseinheit ist diese in einem transparenten rohrförmigen Hohlkörper untergebracht, der für eine Außenreinigung rotierend an eine Reinigungseinheit vorbei bewegbar ist.

Bekannt Ist weiterhin eine Vorrichtung zum Durchleuchten von Eiern mit Infrarot-Lichtstrahlbündeln, die jeweils von unten her auf die zu inspizierenden Eier gerichtet sind, sowie mit einem Kamerasystem zum Erfassen der beim Durchleuchten erhaltenen Bilder (FR 2 768 517 A). Die das Infrarotlicht aussendenden Dioden sind in einem rohrförmigen, transparenten Hohlkörper angeordnet, der seinerseits teilweise in einem Reinigungsbad aufgenommen ist und für die Reinigung seiner Außenfläche durch Rotation durch das Reinigungsbad bewegt wird.

Aufgabe der Erfindung ist es, eine Inspektionsvorrichtung zur Verfügung zu stellen, bei der der Reinigungsaufwand vermindert ist.

Zur Lösung dieser Aufgabe Ist eine Inspektionsvorrichtung entsprechend dem Patentanspruch 1 ausgebildet. Ein Verfahren zur Inspektion von Behältern ist Gegenstand des Patentanspruchs 13.

Kern der Inspektionsvorrichtung ist dabei die Beleuchtungseinheit, welche von einem um die Mittelachse rotierend gelagerten und transparenten Hohlkörper umschlossen wird, wobei der Hohlkörper direkt oder über geeignete Wirkverbindungen motorisch antreibbar ist. Schmutz, Etikettenrechte, Staub und Feuchtigkeit kann auf diese Wiese, ohne die eigentliche Messung oder Überwachung zu unterbrechen, aus dem Überwachungsbereich entfernt werden. Die Rotationsachse des Hohlkörpers kann prinzipiell eine beliebige Ausrichtung aufweisen. Idealerweise ist die Rotationsachse des Hohlkörpers parallel oder quer zur Förderrichtung der Behälter ausgerichtet.

Idealerweise ist der Hohlkörper ein Rohr, das aus einem Material oder einer Materialmischung hergestellt ist, welches für Strahlungen von Wellenlängen Im optisch-sichtbaren Bereich, im Infrarotbereich und/oder im UV-Bereich für derartige Strahlungen mindestens teilweise durchlässig ist. Hierzu sind prinzipiell bekannte Materialien aus geeignetem PTFE, Acrylglas oder getempertem Glas einsetzbar.

Eine Verbesserung der Inspektionsvorrichtung besteht darin, dass zwischen dem Hohlkörper und der Oberseite der Beleuchtungseinheit ein Diffusionselement angeordnet ist, welches zu einer Vergleichmäßigung der Beleuchtungsmittel führt. Dabei soll unter Oberseite der Beleuchtungseinheit diejenige Seite verstanden werden, die zu dem inspizierenden Behälter oder der zu inspizierenden Flasche weist und über welche die Abstrahlung erfolgt. Als Unterseite wird das entsprechende Gegenstück bezeichnet.

Das Diffusionselement kann grundsätzlich eine flache, ebene Form haben, es hat sich aber herausgestellt, dass sie vorteilhafterweise gewölbt und zwischen Hohlkörper und der Oberseite des Beleuchtungselementes angeordnet Ist, wobei die Materialien und die Herstellungsprozesse für derartige Diffusionselemente grundsätzlich bekannt sind.

Eine weitere Verbesserung der Inspektionsvorrichtung kann erreicht werden, wenn ein Polarisationsfilter vorgesehen wird, der idealerweise zwischen dem Hohlkörper und der Oberseite der Beleuchtungseinheit angeordnet wird und vorteilhafterweise ebenfalls eine gewölbte Form aufweist. Der Einsatz von Polarisationsfiltern oder zirkularen Polarisationsfiltern für Inspektionsmaschinen ist bekannt und wird zum Beispiel genutzt, um eine sichere Erkennung von transparenten Feststoffen, wie bspw. Folien, im Behälter zu erreichen.

Geeignete Polarisationsfilter bestehen beispielsweise aus einer Folie aus Polyvinylalkohol, welche mittels beidseitigem Überzug aus einem Celluloseacetaobutyrat mechanisch stabilisiert werden kann. Weitere Materialien sind grundsätzlich bekannt und vom Einsatzfall abhängig einsetzbar.

An der Inspektionsvorrichtung ist bei einer Variante der Vorrichtung an dem Hohlkörper eine Reinigungseinheit angeordnet ist, die idealerweise unterhalb der Beleuchtungseinheit angeordnet. Diese Reinigungseinheit kann weiterhin eine Aufgabevorrichtung umfassen. Die Aufgabevorrichtung weist Auslässe oder Düsen zum Anstrahlen der äußeren Oberfläche des Hohlkörpers auf und ist für gasförmige oder flüssige Medien geeignet ist.

In einer verbesserten Variante umfasst die Reinigungseinheit mindestens eine Abnahmevorrichtung, die mechanische Abstreifer in Form von Bürsten, Dichtlippen aus einem flexiblen Material oder Absaugelemente aufweist, um feste oder flüssige Anhaftungen von der Oberfläche des Hohlkörpers zu entfernen. Durch die Rotation des Hohlkörpers werden die Anhaftungen permanent oder sequentiell von der Oberseite, also aus dem Inspektionsfeld, zur Unterseite gefördert. Dort kann, ohne Rücksicht auf den Mess- und Inspektionsvorgang nehmen zu müssen jede geeignete und erforderliche nasse und/oder trockene Reinigung erfolgen.

Der rotierende Hohlkörper der Inspektionsvorrichtung kann aus Gründen der Hitzeentwicklung und für die Stromversorgung an mindestens einer Seite offen sein. Auf diesem Wege können Ablagerungen an die innere Oberfläche gelangen und in das Inspektionsfeld gefördert werden. Ein Verbesserung besteht daher darin, dass die Reinigungseinheit derart an oder in den Hohlkörper ragt, dass mindestens feste oder flüssige Anhaftungen von der äußeren Oberfläche des Hohlkörpers entfernt werden können und idealerweise auch von der inneren Oberfläche entfernbar sind. Bei einem zylindrischen Hohlkörper kann ein Kragarm, der geeignete Abstreifer aufweist in den Innenraum hineinragen und dort Reinigungsarbeiten erledigen.

Bei der erfinderischen Inspektionsvorrichtung ist der Hohlkörper geschlossen und mit einer Gasleitung verbunden, über welche im bestimmungsgemäßen Betrieb ein inertes Gas, insbesondere Druckluft in das Innere des Hohlkörpers geleitet werden kann. Durch die Aufrechterhaltung eines permanenten Überdruckes im Innenraum das Hohlkörpers, kann eine Verschmutzung der inneren Oberflächen sicher vermieden werden.

Von der Erfindung ist weiterhin ein Verfahren zur Inspektion von Behältern, insbesondere Flaschen umfasst, bei welchem eine Inspektionsvorrichtung gemäß einem der vorstehenden Ausführungsformen eingesetzt wird.

Die wesentlichen Verfahrensschritte sind:
a) Permanente oder gelegentliche Rotation des Hohlkörpers
b) Antransport der Behälter
c) Schwebender Transport im Bereich der Inspektionseinheit
d) Inspektion der Behälter
e) Abtransport der Behälter

Eine Verbesserung der Inspektionsverfahren besteht darin, dass die Oberfläche des Hohlkörpers permanent oder intervallweise gereinigt oder permanent ein Gas, idealerweise gereinigte Druckluft, in den Hohlkörper geleitet wird. Im Inneren des Hohlkörpers wird vorteilhafterweise ein Druck aufrecht gehalten, der größer als der Umgebungsdruck ist und idealerweise den Umgebungsdruck um 0,2 bis 0,5 bar übersteigt. Das Gas oder die Druckluft, welche als Spülgas bezeichnet werden kann, hat eine doppelte Funktion, nämlich den Innenraum von Verschmutzungen frei zu halten und den Innenraum zu kühlen. Daher kann es vorteilhaft sein, dass im Leitungsweg der Gaszuleitung eine Kühlvorrichtung angeordnet ist, über die wenigstens zeitweise das Gas gekühlt werden kann. Weiterhin kann es vorteilhaft sein, das Spülgas vor dem Einleiten in die Hohlkörper zu trockenen.

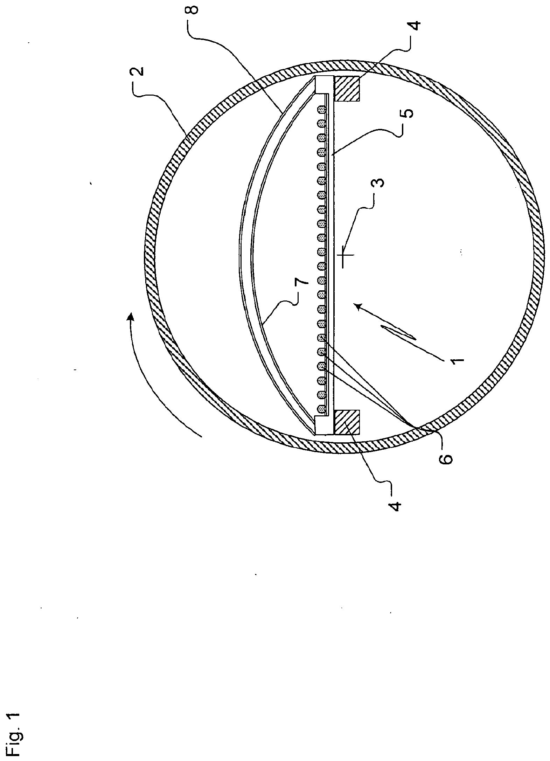

Nachfolgend sind anhand von Beispielen die Inspektionsvorrichtung und das Inspektionsverfahren erläutert. Fig. 1 zeigt die Inspektionsvorrichtung in einer Schnittzeichnung die Beleuchtungseinheit 1. Der Hohlkörper 2 ist ein transparentes Rohr aus einem UV-durchlässigen Acrylglas und weist in dem gezeigten Beispiel einen Durchmesser von 130 mm auf. Der Hohlkörper 2 ist um eine aus der Zeichenebene heraustretenden Rotationsachse 3 rotierend gelagert. Für die Lagerung und den Antrieb stehen dem Fachmann viele bekannte Lösungsmöglichkeiten offen, die hier gewählte zweifache Lagerung an belden Enden des Hohlkörpers 2 und der Antrieb an einem der Rohrenden sind nicht dargestellt. Im Inneren des Hohlkörpers 2 befindet sich die quaderförmige Beleuchtungseinheit 1, die auf zwei Tragarmen 4 ruht. Die rückseitige Aufhängung der Tragarme 4 und der motorische Antrieb des transparenten Hohlkörpers 2 sind nicht näher skizziert, da derartige Vorrichtungen dem Fachmann bekannt sind. Die Beleuchtungseinheit 1 umfasst einen flächigen, horizontalen Träger 5, auf dem ein Diodenfeld angeordnet ist, das eine Vielzahl von Dioden 6 umfasst, die in nicht dargestellter Weise elektrisch mit einer Spannungsquelle verbunden sind. Über der Beleuchtungseinheit 1 sind zwei bogenförmige Elemente angeordnet. Der untere Bogen ist das Diffusionselement 7. Der größte Abstand zwischen den Dioden 6 und dem Diffusionselement 7, die Wölbungshöhe, beträgt 40 mm. In geringem Abstand wird das Diffusionselement 7 von einem Polarisationselement oder Polarisationsfilter 8 überspannt, das im dargestellten Beispiel eine lineare Polarisationsfolie umfasst. Die Bezeichnungen sind, auch wenn nachfolgend nicht immer ausdrücklich genannt, in ihrer Bedeutung in allen Figuren identisch.

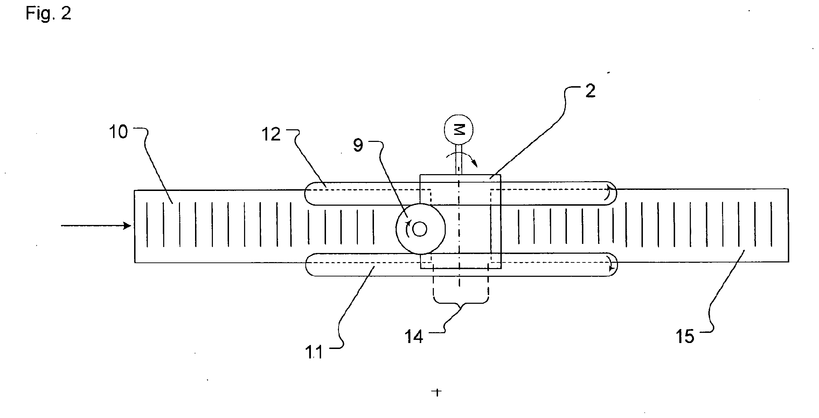

Fig. 2 zeigt die Vorrichtung in einer Draufsicht. Die Flasche 9 befindet sich auf einem Transportband 10, das die Flasche 9 in Pfeilrichtung hin zur Beleuchtungseinheit 1 befördert. In dem gezeigten Stadium des Verfahrens befindet sich die Flasche 9 bereits im Wirkbereich der senkrechten Hebebänder 11 und 12 und direkt vor bzw. bereits teilweise über dem Spalt 14, der zwischen dem zufördernden Transportband 10 und dem abfördernden Transportband 15 gebildet ist. Unter diesem Spalt 14 befinden sich die nicht dargestellte Beleuchtungseinheit und der diese Beleuchtungseinheit 1 umschließende und um die Rotationsachse 3 rotierende Hohlkörper 2.

In dem gezeigten Beispiel werden die endlos umlaufenden Hebebänder mit unterschiedlichen Geschwindigkeiten angetrieben, so dass die im Wirkbereich der Hebebänder 11 und 12 befindliche Flasche 9 um ihre zentrale Achse rotiert,

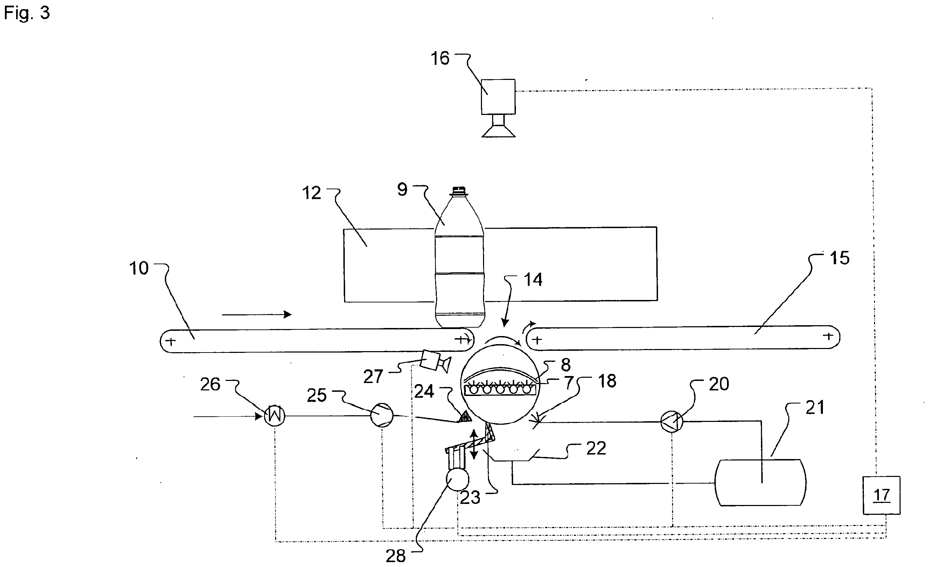

Die Fig. 3 zeigt die gleiche Vorrichtung bzw. das gleiche Verfahren in einer Seitenansicht. In dem Spalt 14, zwischen den Transportbändern 10 und 15 ist die Beleuchtungseinheit 1 mit dem rotierenden, transparenten Hohlkörper 2. Die Beleuchtungseinheit 1 wird überspannt von dem Polarisationselement 8 und dem Diffusionselement 7. Oberhalb des Spaltes 14 sind zwei Kameras 16 platziert, die die Signale aufnehmen und an eine Auswerte- und Steuereinheit 17 weiterleiten. Unterhalb des Hohlkörpers 2, im Bereich des Spaltes 14 ist eine Reinigungseinheit 18 angeordnet. Diese besteht aus eine Sprühkopf 19, einer Pumpe 20, einem Vorlagebehälter 21, einer Auffangwanne 22, einem motorisch schwenkbaren Abstreifer 23 und einer Trocknungseinheit.

Von der Auswerte- und Steuereinheit 17 angesteuert, wird durch die Pumpe 20 über den Sprühkopf 19 sequentiell die äußere Oberfläche des Hohlkörpers 2 angesprüht. Zeitlich davor oder zeitgleich wird der Abstreifer 23 vom Motor 28 angetrieben, an die Oberfläche des Hohlkörpers 2 herangeführt. Der Abstreifer 23 weist doppelte Wischlippen auf, vergleichbar einem Wischblatt für Autoscheiben, und besteht aus einem Siliconmaterial. Aufgrund dieser Anordnung fließt oder fällt ein Teil der Anhaftung vom tiefsten Rohrabschnitt in die Auffangwanne 22. Restliche Anhaftungen und Feuchtigkeit werden durch den Abstreifer 23 entfernt und fallen ebenfalls in die Auffangwanne 22. Über eine Rohrleitung wird das Reinigungsfluid in den Vorlagebehälter 21 geleitet, wo es für einen erneuten Einsatz zur Verfügung steht.

In Rotationsrichtung nach dem Abstreifer 23 ist eine Trocknungseinheit angeordnet, die ein Warmluftgebläse 24 umfasst, welches die finale Trocknung der gereinigten äußeren Oberfläche des Hohlkörpers 2 bewerkstelligt. Der mit dem Heizluftgebläse 24 verbundene Verdichter 25 und das dazugehörige Heizaggregat 26, werden ebenfalls von der Auswerte- und Steuereinheit 17 angesteuert.

Die Oberfläche des schützenden Hohlkörpers 2 kann somit optimal gereinigt werden. Ständig schleifende Elemente oder Abstreifer, die selbst zu Verunreinigungen führen, werden vermieden. In dem vorliegenden Beispiel wird die Oberfläche des Hohlkörpers 2 in Rotationsrichtung nach dem Abstreifer 23 und dem Heizluftgebläse 24 über die Kamera 27 überwacht. Dies entspricht einer Überwachung der Reinigungsleistung der Reinigungseinheit 18. Fehlermeldungen oder Abweichungen vom Sollwert werden ebenfalls an die Auswerte- und Steuereinheit 17 geleitet und dort verarbeitet.

## Patentansprüche

1. Inspektionsvorrichtung zum Kontrollieren von Behältern (9), insbesondere Flaschen, umfassend mindestens eine Transportstrecke (10, 11, 12, 15) oder einen Transportstern zum Zu- und Abfördern der Behälter (9) in einer Förderrichtung, eine Beleuchtungseinheit (1), eine optische Messeinheit (16) und eine Steuereinheit (17), **dadurch gekennzeichnet,**
**dass** die Beleuchtungseinheit (1) von einem um die Mittelachse rotierend gelagerten und transparenten Hohlkörper (2) umschlossen wird,
**dass** der Hohlkörper (2) direkt oder über geeignete Wirkverbindungen motorisch antreibbar ist, und dass die Rotationsachse (3) des Hohlkörpers (2) insbesondere parallel oder quer zur Förderrichtung der Behälter (9) ausgerichtet ist,
**dass** zwischen dem Hohlkörper (2) und der Oberseite der Beleuchtungseinheit (1) ein Diffusionselement (7) und/oder ein Polarisationsfilter (8) angeordnet sind,
**dass** der Hohlkörper (2) mindestens teilweise geschlossen ist, und
**dass** mindestens eine Gasleitung zur Erzeugung eines Überdrucks durch ein eingeleitetes Gas in den Innenraum des Hohlkörpers (2) geführt ist.

2. Inspektionsvorrichtung nach Anspruch 1, **dadurch gekennzeichnet, dass** der Hohlkörper (2) ein Rohr aus einem Material oder einer Materialmischung hergestellt ist, das für Strahlungen von Wellenlängen im optisch-sichtbaren Bereich, im Infrarotbereich und/oder im ultravioletten Bereich durchlässig ist, und dass das Material für diese Strahlungen mindestens teilweise durchlässig ist.

3. Inspektionsvorrichtung nach Anspruch 1 oder 2, **dadurch gekennzeichnet, dass** das Diffusionselement (7) gewölbt zwischen Hohlkörper (2) und der Oberseite des Beleuchtungselementes angeordnet ist.

4. Inspektionsvorrichtung nach einem der vorstehenden Ansprüche, **dadurch gekennzeichnet, dass** das Polarisationsfilter (8) ein zirkulärer Polarisationsfilter ist.

5. Inspektionsvorrichtung nach Anspruch 4, **dadurch gekennzeichnet, dass** der Polarisationsfilter (8) gewölbt ist und zwischen Hohlkörper (2) und der Oberseite der Beleuchtungseinheit (1) angeordnet ist.

6. Inspektionsvorrichtung nach einem der vorstehenden Ansprüche, **dadurch gekennzeichnet, dass** der Polarisationsfilter (8) zwischen dem Hohlkörper (2) und dem Diffusionselement (7) angeordnet ist oder die Abfolge von Polarisationsfilter (8) und Diffusionselement (7) vertauscht sind.

7. Inspektionsvorrichtung nach einem der vorstehenden Ansprüche, **dadurch gekennzeichnet, dass** an dem Hohlkörper (2) mindestens eine Reinigungseinheit (18) angeordnet ist.

8. Inspektionsvorrichtung nach Anspruch 7 **dadurch gekennzeichnet, dass** die Reinigungseinheit (18) unterhalb der Beleuchtungseinheit (1) angeordnet ist.

9. Inspektionsvorrichtung nach Anspruch 7 oder 8, **dadurch gekennzeichnet, dass** die mindestens eine Reinigungseinheit (18) mindestens eine Aufgabevorrichtung umfasst, die Auslässe oder Düsen zum Anstrahlen der äußeren Oberfläche des Hohlkörpers (2) umfasst, wobei die Aufgabevorrichtung für gasförmige oder flüssige Medien geeignet ist.

10. Inspektionsvorrichtung nach einem der Ansprüche 7 bis 9, **dadurch gekennzeichnet, dass** die mindestens eine Reinigungseinheit (18) mindestens eine Abnahmevorrichtung umfasst, die mechanische Abstreifer (23) in Form von Bürsten, Dichtlippen aus einem flexiblen Material oder Absaugelemente umfasst, um feste oder flüssige Anhaftungen von der Oberfläche des Hohlkörpers zu entfernen.

11. Inspektionsvorrichtung nach Anspruch 10, **dadurch gekennzeichnet, dass** der mindestens eine mechanische Abstreifer (23) motorisch antreibbar ist.

12. Inspektionsvorrichtung nach einem der Ansprüche 7 bis 11, **dadurch gekennzeichnet, dass** die Reinigungseinheit (18) derart an oder in den Hohlkörper (2) ragt, dass mindestens feste oder flüssige Anhaftungen von der äußeren Oberfläche des Hohlkörpers (2) entfernt werden können und idealerweise auch von der inneren Oberfläche entfernbar sind.

13. Verfahren zur Inspektion von Behältern (9), insbesondere Flaschen, **dadurch gekennzeichnet, dass** die eine Inspektionsvorrichtung nach einem der vorstehenden Ansprüche eingesetzt wird und dass ein Gas, insbesondere ein inertes Gas, wie Druckluft oder eine Edelgas, in das Innere des Hohlkörpers (2) der Inspektionsvorrichtung geleitet wird
und wobei bei dem
Inspektionsverfahren mindestens die folgenden Schritte durchlaufen werden
a) Permanente oder gelegentliche Rotation des Hohlkörpers (2)
b) Antransport der Behälter (9)
c) Schwebender Transport der Behälter (9) im Bereich der Inspektionseinheit
d) Inspektion der Behälter (9)
e) Abtransport der Behälter (9).

14. Inspektionsverfahren nach einem der Ansprüche 13, **dadurch gekennzeichnet, dass** die Oberfläche des Hohlkörpers (2) permanent oder intervallweise gereinigt wird.

15. Inspektionsverfahren nach Anspruch 13, **dadurch gekennzeichnet, dass** im Inneren des Hohlkörpers (2) ein Druck vorliegt, der größer als Umgebungsdruck ist und idealerweise den Umgebungsdruck um 0,2 bis 0,5 bar übersteigt.

## Claims

1. Inspection device for monitoring containers (9), particularly bottles, comprising at least one transport path (10, 11, 12, 15) or a transport star for supplying and removing the containers (9) in a conveying direction, a lighting unit (1), an optical measuring unit (16), and a control unit (17), **characterised in that** the lighting unit (1) is surrounded by a transparent hollow body (2), mounted in a rotatable fashion about the central axis,
that the hollow body (2) may be driven by a motor, either directly or via appropriate operative connections, and that the axis of rotation (3) of the hollow body (2) is aligned in particular parallel or transverse to the conveying direction of the containers (9),
that arranged between the hollow body (2) and the upper side of the lighting unit (1) are a diffusion element (7) and/or a polarisation filter (8),
that the hollow body (2) is at least partially closed, and
that at least one gas line is laid into the interior of the hollow body (2) in order to produce an overpressure by means of an introduced gas.

2. Inspection device according to claim 1, **characterised in that** the hollow body (2) is a tube made of a material or material mixture which is transparent to rays of wavelengths in the optically visible range, in the infrared range, and/or in the ultraviolet range, and that the material is at least partially transparent to these rays.

3. Inspection device according to claim 1 or 2, **characterised in that** the diffusion element (7) is arranged cambered between the hollow body (2) and the upper side of the lighting element.

4. Inspection device according to any one of the preceding claims, **characterised in that** the polarisation filter (8) is a circular polarisation filter.

5. Inspection device according to claim 4, **characterised in that** the polarisation filter (8) is cambered and is arranged between the hollow body (2) and the upper side of the lighting unit (1).

6. Inspection device according to any one of the preceding claims, **characterised in that** the polarisation filter (8) is arranged between the hollow body (2) and the diffusion element (7), or the sequence of polarisation filter (8) and diffusion element (7) is changed over.

7. Inspection device according to any one of the preceding claims, **characterised in that** at least one cleaning unit (18) is arranged at the hollow body (2).

8. Inspection device according to claim 7, **characterised in that** the cleaning unit (18) is arranged underneath the lighting unit (1).

9. Inspection device according to claim 7 or 8, **characterised in that** the at least one cleaning unit (18) comprises at least one emission device, which comprises outlets or nozzles for spraying the upper surface of the hollow body (2), wherein the emission device is suitable for gaseous or fluid media.

10. Inspection device according to any one of claims 7 to 9, **characterised in that** the at least one cleaning unit (18) comprises at least one removal device, which comprises mechanical scrapers (23) in the form of brushes or sealing lips, made of a flexible material, or suction elements, in order to remove solid or liquid material adhering to the surface of the hollow body.

11. Inspection device according to claim 10, **characterised in that** the at least one mechanical scraper (23) can be motor driven.

12. Inspection device according to any one of claims 7 to 11, **characterised in that** the cleaning unit (18) projects at or into the hollow body (2) in such a way that at least solid or liquid adhering materials can be removed from the outer surface of the hollow body (2), and ideally can also be removed from the inner surface.

13. Method for the inspection of containers (9), particularly bottles, **characterised in that** an inspection device according to any one of the preceding claims is used, and that a gas, in particular an inert gas, such as compressed air or a noble gas, is conveyed into the interior of the hollow body (2) of the inspection device
and wherein
during the inspection process at least the following steps are run through:
a) permanent or occasional rotation of the hollow body (2)
b) delivery transport of the containers (9)
c) suspended transport of the containers (9) in the region of the inspection unit
d) inspection of the containers (9)
e) removal transport of the conveyors (9).

14. Inspection method according to claim 13, **characterised in that** the surface of the hollow body (2) is cleaned permanently or at intervals.

15. Inspection method according to claim 13, **characterised in that** in the interior of the hollow body (2) a pressure pertains which is greater than ambient pressure, and ideally exceeds the ambient pressure by 0.2 to 0.5 bar.

## Revendications

1. Dispositif d'inspection pour le contrôle de récipients (9), en particulier de bouteilles, comprenant au moins une vis transporteuse (10, 11, 12, 15) ou une étoile de transport pour l'amenée et l'évacuation des récipients (9) dans une direction de transport, une unité d'éclairage (1), une unité de mesure optique (16) et une unité de commande (17), **caractérisé en ce que** l'unité d'éclairage (1) est entourée par un corps creux (2) transparent et logé en rotation autour de l'axe médian,
que le corps creux (2) peut être entraîné par moteur directement ou par le biais de liaisons actives adaptées, et que l'axe de rotation (3) du corps creux (2) est orienté en particulier parallèlement ou transversalement à la direction de transport des récipients (9),
qu'un élément de diffusion (7) et/ou un filtre de polarisation (8) sont agencés entre le corps creux (2) et le côté supérieur de l'unité d'éclairage (1),
que le corps creux (2) est fermé au moins en partie, et
qu'au moins une conduite de gaz est guidée pour la génération d'une surpression par un gaz introduit dans l'espace intérieur du corps creux (2).

2. Dispositif d'inspection selon la revendication 1, **caractérisé en ce que** le corps creux (2) est un tube fabriqué en un matériau ou en un mélange de matériaux, qui est perméable aux rayonnements aux longueurs d'ondes dans le domaine optique visible, dans le domaine infrarouge et/ou dans le domaine ultraviolet, et que le matériau est perméable au moins en partie à ces rayonnements.

3. Dispositif d'inspection selon la revendication 1 ou 2, **caractérisé en ce que** l'élément de diffusion (7) est agencé bombé entre le corps creux (2) et le côté supérieur de l'élément d'éclairage.

4. Dispositif d'inspection selon l'une quelconque des revendications précédentes, **caractérisé en ce que** le filtre de polarisation (8) est un filtre de polarisation circulaire.

5. Dispositif d'inspection selon la revendication 4, **caractérisé en ce que** le filtre de polarisation (8) est bombé et est agencé entre le corps creux (2) et le côté supérieur de l'unité d'éclairage (1).

6. Dispositif d'inspection selon l'une quelconque des revendications précédentes, **caractérisé en ce que** le filtre de polarisation (8) est agencé entre le corps creux (2) et l'élément de diffusion (7) ou l'ordre du filtre de polarisation (8) et de l'élément de diffusion (7) est inversé.

7. Dispositif d'inspection selon l'une quelconque des revendications précédentes, **caractérisé en ce qu'**au moins une unité de nettoyage (18) est agencée au niveau du corps creux (2).

8. Dispositif d'inspection selon la revendication 7, **caractérisé en ce que** l'unité de nettoyage (18) est agencée sous l'unité d'éclairage (1).

9. Dispositif d'inspection selon la revendication 7 ou 8, **caractérisé en ce que** l'au moins une unité de nettoyage (18) comprend au moins un dispositif d'alimentation, qui comprend des sorties ou buses pour l'irradiation de la surface extérieure du corps creux (2), dans lequel le dispositif d'alimentation est adapté aux agents gazeux ou fluides.

10. Dispositif d'inspection selon l'une quelconque des revendications 7 à 9, **caractérisé en ce que** l'au moins une unité de nettoyage (18) comprend au moins un dispositif d'enlèvement, qui comprend des racleurs mécaniques (23) sous forme de brosses, lèvres d'étanchéité en un matériau souple ou éléments d'aspiration, pour retirer des dépôts adhérents solides ou fluides de la surface du corps creux.

11. Dispositif d'inspection selon la revendication 10, **caractérisé en ce que** l'au moins un racleur mécanique (23) peut être entraîné par moteur.

12. Dispositif d'inspection selon l'une quelconque des revendications 7 à 11, **caractérisé en ce que** l'unité de nettoyage (18) dépasse au niveau de ou dans le corps creux (2) de sorte qu'au moins des dépôts adhérents solides ou fluides puissent être retirés de la surface extérieure du corps creux (2) et idéalement puissent également être retirables de la surface intérieure.

13. Procédé d'inspection de récipients (9), en particulier de bouteilles, **caractérisé en ce que** l'un dispositif d'inspection selon l'une quelconque des revendications précédentes est utilisé et qu'un gaz, en particulier un gaz inerte, tel de l'air comprimé ou un gaz noble, est conduit à l'intérieur du corps creux (2) du dispositif d'inspection et dans lequel lors du procédé d'inspection au moins les étapes suivantes sont réalisées :
a) rotation permanente ou occasionnelle du corps creux (2)
b) fourniture des récipients (9)
c) transport flottant des récipients (9) dans la zone de l'unité d'inspection
d) inspection des récipients (9)
e) évacuation des récipients (9).

14. Procédé d'inspection selon l'une quelconque des revendications 13, **caractérisé en ce que** la surface du corps creux (2) est nettoyée en permanence ou par intervalles.

15. Procédé d'inspection selon la revendication 13, **caractérisé en ce qu'**est présente une pression à l'intérieur du corps creux (2), qui est supérieure à la pression ambiante et dépasse idéalement la pression ambiante de 0,2 à 0,5 bar.
